# EUROPÄISCHE PATENTSCHRIFT

(11) **EP 1 117 746 B1**
(45) Veröffentlichungstag und Bekanntmachung des Hinweises auf die Patenterteilung: **26.03.2003**
(21) Anmeldenummer: 99941532.6
(22) Anmeldetag: 06.08.1999
(51) Int. Cl.: C09J 7/02, B32B 27/12, A47G 27/04

(54) **SELBSTKLEBEFOLIE**
SELF-ADHESIVE FOIL
FEUILLE AUTO-ADH SIVE

(30) Priorität: 07.08.1998 DE 19835919
(43) Veröffentlichungstag der Anmeldung: 25.07.2001
(73) Patentinhaber: Silu Verwaltung AG, CH-6045 Meggen (CH)
(72) Erfinder: SIEBER, Reto, CH-6019 Sigigen (CH); SIEBER, Marco, CH-6026 Rain (CH); VANDEWEERDT, Patrick, CH-6331 Hünenberg (CH)
(74) Vertreter: Leske, Thomas, Dr.
(86) Internationale Anmeldenummer: EP9905704
(87) Internationale Veröffentlichungsnummer: WO00008111

(56) Entgegenhaltungen:
- EP-A- 0 567 110
- DE-A- 3 243 567
- GB-A- 2 063 710
- US-A- 5 376 419
- DATABASE WPI Section Ch, Week 199829 Derwent Publications Ltd., London, GB; Class A81, AN 1998-328686 XP002124769 & JP 10 120991 A (NITTO DENKO CORP), 12. Mai 1998 (1998-05-12)

## Beschreibung

Die Erfindung betrifft eine Selbstklebefolie zum Verkleben eines Fußbodenbelags auf einem Fußboden.

Es sind bereits Selbstklebebänder bzw. -folien bekannt, die eine auf beiden Oberflächen einer Trägerschicht aufgebrachte Haftkleberbeschichtung aufweisen. Dabei ist entweder die Trägerschicht der Selbstklebebänder selbst als Traggewebe ausgebildet, oder auf der Trägerschicht wird ein Stoffgewebe zur Erhaltung der Dimensionsstabilität aufgebracht.
Die Haftkleberbeschichtung weist auf beiden Oberflächen der Trägerschicht unterschiedliche Haftstärken auf. Die Haftstärken der Haftkleberbeschichtung sind dabei so gewählt, daß die obere, dem Fußbodenbelag zugewandte Oberfläche eine größere Haftstärke aufweist, als die untere, dem Fußboden zugewandte Seite. Die üblicherweise verwendeten Kleberauftragsgewichte der Haftklebergeschichtungen, insbesondere auf der unteren Oberfläche, liegen dabei im Bereich von 100 g/m², die wenigsten liegen im Bereich von 70 g/m² und kaum ein Hersteller verwendet Kleberauftragsgewichte unter 70 g/m².

Durch die unterschiedlichen Haftkleberbeschichtungen und/oder Haftstärken soll erreicht werden, daß der Fußbodenbelag, beispielsweise Teppichboden, zum einen gut auf dem Fußboden, beispielsweise Parkett, haftet und zum anderen der Fußbodenbelag zusammen mit dem an ihm haftenden Selbstklebeband rückstandsfrei vom Fußboden lösbar ist. Um beim Verlegen ein sicheres Haften sowohl an dem Fußbodebelag als auch an dem Fußboden zu gewährleisten, weisen die herkömmlichen Selbstklebebänder, da sie i.A. nicht flächig verarbeitet werden, jedoch nur einen geringen Unterschied in der Haftkleberbeschichtung und/oder in der Haftstärke der beiden Oberflächen auf. Dadurch besteht jedoch die Gefahr, daß bei einer zu starken Verklebung an dem Fußboden ein Teil des Haftklebers an dem Fußboden haften bleibt, oder sich das Selbstklebeband beim Ablösen eher vom Fußbodenbelag als vom Fußboden löst. Ein rückstandsfreies Ablösen ist somit nicht unter allen Bedingungen gewährleistet. Zwar werden auch Selbstklebebänder verwendet, deren Haftfähigkeitsunterschiede durch die aufgrund der Unebenheiten der Traggewebe bestehenden Strukturunterschiede auf den jeweiligen Oberflächen hervorgerufen werden, d.h. die Selbstklebebänder haben eine "raue" Oberfläche mit einer geringeren Haftfähigkeit und eine "glattere" Oberfläche mit einer größeren Haftfähigkeit. Jedoch kann durch die punktuellen Belastungen an der "rauen" Oberfläche und der damit verbundenen Haftzentren zwischen Selbstklebeband und Fußboden auch mit dieser Ausgestaltung ein rückstandsfreies Ablösen des Fußbodenbelags vom Fußboden nicht unter allen Bedingungen gewährleistet werden.

Der Erfindung liegt daher die Aufgabe zugrunde, eine Selbstklebefolie zu schaffen, die im wesentlichen unter allen Bedingungen sowohl ein sicheres Haften des Fußbodenbelages an dem Fußboden als auch ein rückstandsfreies Ablösen des Fußbodenbelages von dem Fußboden sicherstellt und so eine bequeme Handhabbarkeit bietet.

Die Aufgabe wird erfindungsgemäß mit einer Selbstklebefolie gemäß Anspruch 1 oder 5 gelöst. Zweckmäßige Weiterbildungen sind in den abhängigen Ansprüchen angegeben.

Die erfindungsgemäße Selbstklebefolie dient dem Verkleben eines Fußbodenbelags, insbesondere eines Teppichbodens, auf einem Fußboden, insbesondere Parkett.

Die Selbstklebefolie weist eine geeignete Trägerschicht auf. Bevorzugt besteht die Trägerschicht aus Kunststofffolie, z.B. Polypropylen- oder Polyethylenfolie. es ist prinzipiell jedoch auch jedes andere geeignete Material, wie Kautschuk, Latex, o.ä. verwendbar.

Zumindest auf der oberen, dem Fußbodenbelag zugewandten Oberfläche weist die Trägerfolie ein Gewebe auf, das insbesondere zum Erhalt der Dimensionsstabilität der Selbstklebefolie beim Verlegen und beim Ablösen dient. Das Gewebe kann auch an der unteren, dem Fußboden zugewandten Oberfläche oder an beiden Oberflächen angeordnet sein. Das Gewebe wird durch Fäden aus geeignetem reißfesten Material gebildet.

Erfindungsgemäß weisen beide Oberflächen eine Haftkleberbeschichtung auf, wobei die Haftkleberbeschichtung und/oder die Haftstärke auf der unteren Oberfläche nur ein Bruchteil derjenigen auf der oberen Oberfläche beträgt. Es können dazu auf jeder der beiden Oberflächen Haftkleber mit unterschiedlichen Klebekräften oder auf jeder Oberfläche jeweils der gleiche Haftkleber Verwendung finden.

Als Haftkleber hat sich eine Acrylat-Dispersion, angereichert mit Harzen und mit darin enthaltenem UV- und Alterungsschutz bewährt, wobei jedoch auch jeder andere geeignete Haftkleber verwendbar ist.

Die Haftkleberbeschichtung kann flächig aufgebracht sein; aber auch eine im wesentlichen streifenförmig an den Oberflächen angeordnete Haftkleberbeschichtung mit kleberfreien Zwischenräumen ist möglich. Die Kombination aus flächenförmigem Auftrag und streifenförmigen Auftrag auf je einer der Oberflächen oder die Kombination davon auf einer der Oberflächen ist ebenfalls möglich.

Zumindest die untere Oberfläche mit der deutlich geringeren Haftkleberbeschichtung ist erfindungsgemäß im wesentlichen eben ausgebildet. Auch die obere Oberfläche kann im wesentlichen eben ausgebildet sein.

Die erfindungsgemäße Ausgestaltung der Selbstklebefolie mit einem Bruchteil der Haftkleberbeschichtung auf der unteren Oberfläche bietet aufgrund der verhältnismäßig geringen Haftkleberbeschichtung und/oder Haftstärke ein besonders sicheres und rückstandsfreies Ablösen des Fußbodenbelages bzw. der daran haftenden Selbstklebefolie. Da die erfindungsgemäße Selbstklebefolie durch die im Vergleich zur unteren Oberfläche wesentlich stärkere Haftkraft an der oberen Oberfläche sicher an dem Fußbodenbelag haftet, ist ein einfaches Ablösen des Fußbodenbelages mit der daran haftenden Selbstklebefolie möglich. Zusätzlich wird durch die erfindungsgemäß im wesentlichen ebene untere Oberfläche der Selbstklebefolie trotz der verhältnismäßig geringen Haftkleberbeschichtung und/oder Haftstärke ein sicheres Verkleben des Fußbodenbelags auf einem Fußboden, insbesondere auf glattem Parkett erreicht, da die Verklebung nicht nur punktuell wie bei Selbstklebebändern mit strukturierten unteren Oberflächen erfolgt. Da aufgrund der erfindungsgemäß im wesentlichen ebenen unteren Oberfläche keine Haftzentren entstehen, die aufgrund ihrer geringen Flächen kein sicheres Verkleben bieten aber punktuell stärker an den Fußboden haften, wird so zusätzlich zur sicheren Verklebung auch das sichere Ablösen gewährleistet.

Besonders vorteilhaft ist es, wenn die Selbstklebefolie so ausgebildet ist, daß ihre Länge und Breite so bemessen sind, daß sie im Gegensatz zu herkömmlichen Selbstklebebändern im wesentlichen den gesamten mit dem Fußbodenbelag zu belegenden Fußboden großflächig abdeckt. Die Länge ist dabei so gewählt, wie es die räumlichen Gegebenheiten und die Verarbeitbarkeit erfordern. Als Breite ist aus Gründen der Verarbeitbarkeit und Praktikabilität ein Bereich von 350 bis 2000 mm bevorzugt. Noch bevorzugter ist ein Breitenbereich von 500 bis 1500 mm und besonders bevorzugt ist ein Bereich von 600 bis 1000 mm. Selbstverständlich kann es bei entsprechenden räumlichen Gegebenheiten bevorzugt sein, auch die Längen in diesen Bereichen zu wählen.

Die großflächige Ausbildung der Selbstklebefolie bietet ebenso wie die im wesentlichen ebene Ausformung der unteren Oberfläche, trotzdem die Haftkleberbeschichtung und/oder die Haftstärke dieser Oberfläche nur einen Bruchteil derjenigen der oberen Oberfläche beträgt, ein besonders sicheres Haften des Fußbodenbelages an dem Fußboden, da auf diese Weise im Gegensatz zu konventionellen Selbstklebebändern eine große Haftfläche erzielt wird.

Da jeweils Haftkleber mit unterschiedlichen Klebekräften auf den Oberflächen aufgebracht werden können, ist nicht allein das Kleberauftragsgewicht für die erfindungsgemäß unterschiedlichen Haftstärken verantwortlich, sondern auch die unterschiedlichen Klebekräfte der verwendeten Haftkleber.

Als allgemein gültiges Meßverfahren für die Haftstärke einer Haftkleberbeschichtung dient die Messung der Haftkraft nach DIN 1939. Dabei wird die Kraft gemessen, die zum Abziehen der Selbstklebefolie, welche mit der zu untersuchenden Haftkleberbeschichtung einer bestimmten Klebekraft und eines bestimmten Auftragsgewichtes versehen ist, benötigt wird. Dabei beträgt nach der Prüfnorm die Breite der Selbstklebefolie 25 mm und als Klebepartner der Selbstklebefolie dient eine Stahloberfläche.

Erfindungsgemäß ist eine nach DIN 1939 gemessene Haftkraft der Haftkleberbeschichtung der unteren Oberfläche in einem Bereich von 0,8 bis 5 N bevorzugt. Bevorzugter ist ein Bereich von 1,5 bis 3 N und am meisten bevorzugt ist ein Haftkraftereich von 2,0 bis 2,6 N.

Für die nach DIN 1939 gemessene Haftkraft der Haftkleberbeschichtung der oberen Oberfläche ist ein Bereich von 30 bis 60 N bevorzugt.

In einer bevorzugten Ausführungsform der Erfindung wird die unterschiedliche Haftkleberbeschichtung und/oder die unterschiedliche Haftstärke bzw. Haftkraft der beiden Oberflächen durch unterschiedliche Kleberauftragsgewichte bewirkt, wobei die obere Oberfläche mit der größeren Haftstärke ein höheres Kleberauftragsgewicht aufweist als die untere Oberfläche.

Besonders bevorzugt ist eine Ausführungsform, bei welcher das Kleberauftragsgewicht auf der oberen Oberfläche im Bereich von 100 bis 250 g/m² und auf der unteren Oberfläche im Bereich von 5 bis 40 g/m² liegt. Für die untere Oberfläche ist dabei ein Bereich von 8 bis 20 g/m² am meisten bevorzugt.

Wie schon angesprochen, können auf jeder der beiden Oberflächen unterschiedliche Haftkleber mit unterschiedlichen Klebekräften oder auf jeder Oberfläche jeweils der gleiche Haftkleber Verwendung finden. Die obrigen Angaben beziehen sich auf den Fall, daß der gleiche Haftkleber auf die obere und die untere Oberfläche aufgebracht wird.

Die Haftkleberbeschichtung kann flächig aufgebracht sein; aber auch eine im wesentlichen streifenförmig an den Oberflächen angeordnete Haftkleberbeschichtung mit kleberfreien Zwischenräumen ist möglich. Die Kombination aus flächenförmigem Auftrag und streifenförmigen Auftrag auf je einer der Oberflächen oder die Kombination davon auf einer der Oberflächen ist ebenfalls möglich. Die angegebenen Kleberauftragsgewichte beziehen sich in einem dieser Fälle lediglich auf die mit einer Haftkleberbeschichtung versehenen Gebiete der Oberflächen.

In einer weitem bevozugten Ausführungsform der Erfindung besteht die textile Struktur an zumindest der oberen Oberfläche der Trägerschicht der Selbstklebefolie aus Fäden aus geeignetem reißfesten Material, wie insbesondere Baumwolle, Kunsttoff, o.Ä., welche grobmaschig angeordnet sind.
Die Anordnung kann dabei jede im wesentlichen grobmaschige Gestaltung annehmen, insbesondere sind rechteckig zueinander angeordnete und in der jeweiligen Richtung parallel liegende Fäden bevorzugt. Die Fäden können in den jeweiligen Richtungen parallel zu den Seitenkanten der Selbstklebefolie ausgerichtet sein, oder aber einen beliebigen Winkel dazu bilden.

Besonders bevorzugt ist eine Ausführungsform, bei welcher die textile Struktur parallel laufende Fäden sowie im stumpfen Winkel dazu rautenförmig angeordnete Fäden aufweist.

Besonders bevorzugt beträgt der jeweilige Fadenabstand der textilen Struktur zwischen 3 und 30 mm.

Es kann sich bei der textilen Struktur um ein Fadengelege aber auch um eine netzartig versponnene Struktur, bei der die Fäden aus feinen miteinander versponnenen Einzelfäden bestehen, handeln. Dabei befinden sich die Fäden der textilen Struktur auf zumindest der oberen Oberfläche der Trägerschicht und sind in die Haftkleberschicht eingebettet und von dieser im wesentlichen umschlossen, so daß auch die entprechende Oberfläche der Selbstklebefolie im wesentlichen eben ausgebildet ist.

Die grobmaschige textile Struktur sorgt für die Dimensionsstabilität der Selbstklebefolie, wobei die im wesentlichen ebene Ausbildung der entsprechenden Oberfläche auch im wesentlichen erhalten bleibt. Dies erleichtert das sichere Ablösen des Fußbodenbelages von dem Fußboden, da somit die Selbstklebefolie beim Ablösen sicher und formstabil an dem Fußbodenbelag haftet.

Durch die besonders bevorzugte parallele sowie rautenförmige Anordnung der Fäden ergibt sich eine zusätzliche Dimensionsstabilität in schräger Richtung, d.h. in Richtung der rautenförmig angeordneten Fäden. Diese zusätzliche Stabilität ist besonders bei schrägem (im Bezug auf die parallel zu den Rändern angeordneten Fäden) Abziehen des Fußbodenbelages von Vorteil und bietet zusätzliche Sicherheit für das rückstandsfreie Ablösen von dem Fußboden.

Zur besonders leichten Handhabung der Selbstklebefolie vor und während des Verlegens und Verklebens eines Fußbodenbelags an einem Fußboden, weist die Selbstklebefolie in einer weiteren bevorzugten Ausführungsform zumindest auf der oberen Oberfläche einen entfernbaren Abdeckfilm zur Abdeckung der Haftkleberbeschichtung auf.

Es kann auch zusätzlich oder lediglich auf der unteren Oberfläche ein entfernbarer Abdeckfilm vorhanden sein. Aufgrund der wesentlich geringeren Haftstärke der unteren Oberfläche ist dies jedoch nicht unbedingt erforderlich.

Der Abdeckfilm besteht vorzugsweise aus einem an sich bekannten silikonbehandelten Trennpapier, welches lösbar haftend praktisch lückenlos an der entsprechenden Oberfläche anliegt.

Zum Transport kann die Selbstklebefolie in Rollenform vorliegen.

Die Verwendung einer erfindungsgemäßen Selbstklebefolie erfolgt bevorzugt auf folgende Weise:

Der gesamte Fußboden wird mit der Selbstklebefolie bedeckt. Dabei richtet man die untere Oberfläche mit der geringeren Haftstärke in Richtung Fußboden. Die obere Oberfläche ist dabei bevorzugt mit dem Abdeckfilm bedeckt. Dann wird der Fußbodenbelag provisorisch aufgelegt und gegebenenfalls zugeschnitten. Anschließend wird ein Teil des Fußbodenbelags wieder zurückgeschlagen, und der Abdeckfilm auf diesem Teil der Selbstklebefolie entfernt. Der zurückgeschlagene Teil des Fußbodenbelags wird wieder auf die obere Oberfläche mit der größeren Haftstärke geklappt und gegebenenfalls angepreßt. Mit den übrigen Teilen des Fußbodenbelags wird auf gleiche Weise verfahren, bis der gesamte Fußbodenbelag großflächig am Fußboden verklebt ist.

Zum rückstandsfreien Ablösen des Fußbodenbelags muß dieser lediglich nach oben vom Fußboden abgezogen werden. Dabei trennt sich die Selbstklebefolie vom Fußboden und bleibt am Fußbodenbelag haften. Wenn man den Fußbodenbelag mit der nun schon daran haftenden Selbstklebefolie wiederverwenden will, kann man die untere mit Haftkleberbeschichtung versehene Oberfläche beim Aufrollen des Fußbodenbelages mit einer geeigneten Abdeckfolie schützen.

Alternativ zu der oben beschriebenen erfindungsgemäßen Selbstklebefolie mit einer zumindest an der oberen Oberfläche angeordneten textilen Struktur zur Dimensionsstabilisierung, ist auch eine erfindungsgemäße Selbstklebefolie ohne eine textile Struktur möglich.

Zum Erhalt der Dimensionsstabilität ist dazu jedoch eine besonders geeignete reiß- und dehnfeste Trägerschicht nötig. Diese kann aus den schon oben genannten Materialien für eine Trägerschicht bestehen, wobei die werwendeten Dicken jedoch meist größer gewählt werden müssen als bei einer Selbstklebefolie mit zusätzlicher textiler Struktur.

Alle weiter oben getroffenen Aussagen, beschriebenen Ausführungsformen, Material-, Zahlen- und Bereichsangaben und Verfahren sollen mit Ausnahme der speziell die textile Struktur betreffenden Punkte auch für die erfindungsgemäße Selbstklebefolie ohne textile Struktur gelten.

## Patentansprüche

1. Selbstklebefolie, zum Verkleben eines Fußbodenbelags, insbesondere eines Teppichbodens, auf einem Fußboden, insbesondere Parkett, mit einer Trägerschicht, welche an einer oberen, dem Fußbodenbelag zugewandten Oberfläche und an einer unteren, dem Fußboden zugewandten Oberfläche mit einer Haftkleberbeschichtung beschichtet ist, wobei die Haftkleberbeschichtung auf beiden Oberflächen eine unterschiedliche Haftstärke aufweist und die Haftstärke auf der unteren Oberfläche geringer ist als diejenige auf der oberen Oberfläche,
**dadurch gekennzeichnet, daß**
die Trägerschicht aus einer Kunststofffolie besteht und die Haftkleberbeschichtung zumindest auf der unteren Oberfläche eben ausgebildet ist, und daß die Selbstklebefolie mit einer Mindestbreite von 350 mm zum großflächigen Abdecken des mit dem Fußbodenbelag zu belegenden Fußbodens ausgebildet ist.

2. Selbstklebefolie nach Anspruch 1, **dadurch gekennzeichnet, daß** die Selbstklebefolie zumindest auf der oberen Oberfläche eine textile Struktur aufweist.

3. Selbstklebefolie nach Anspruch 2, **dadurch gekennzeichnet, daß** die textile Struktur Fäden in einer grobmaschigen Anordnung aufweist.

4. Selbstklebefolie nach Anspruch 3, **dadurch gekennzeichnet, daß** die textile Struktur parallel laufende Fäden in einer grobmaschigen Anordnung sowie im stumpfen Winkel dazu rautenförmig angeordnete Fäden aufweist.

5. Selbstklebefolie nach einem der Ansprüche 2 bis 4, **dadurch gekennzeichnet, daß** die textile Struktur Fäden in einem Fadenabstand von 3 bis 30 mm aufweist.

6. Selbstklebefolie nach einem der Ansprüche 1 bis 5, **dadurch gekennzeichnet, daß** die Haftstärke der unteren Oberfläche eine Haftkraft (gemessen nach DIN 1939) in der Größenordnung von 0,8 bis 5 N, insbesondere von 1,5 bis 3 N und insbesondere von 2,0 bis 2,6 N aufweist.

7. Selbstklebefolie nach einem der Ansprüche 1 bis 6, **dadurch gekennzeichnet, daß** die unterschiedliche Haftstärke der beiden Oberflächen durch unterschiedliche Kleberauftragsgewichte bewirkt wird, wobei die Oberfläche mit der größeren Haftstärke ein höheres Kleberauftragsgewicht aufweist.

8. Selbstklebefolie nach einem der Ansprüche 1 bis 7, **dadurch gekennzeichnet, daß** die Haftkleberbeschichtung aus jeweils unterschiedlichen Haftklebern auf der oberen bzw. der unteren Oberfläche besteht.

9. Selbstklebefolie nach Anspruch 7 oder 8, **dadurch gekennzeichnet, daß** das Kleberauftragsgewicht auf der oberen Oberfläche im Bereich von 100 bis 250 g/m² und auf der unteren Oberfläche im Bereich von 5 bis 40 g/m², insbesondere 8 bis 20 g/m² liegt.

10. Selbstklebefolie nach einem der Ansprüche 1 bis 9, **dadurch gekennzeichnet, daß** ein entfernbarer Abdeckfilm auf zumindest der oberen Oberfläche vorhanden ist.

11. Selbstklebefolie nach einem der Ansprüche 1 bis 10, **dadurch gekennzeichnet, daß** die Breite der Selbstklebefolie in einem Bereich von 350 mm bis 2000 mm liegt, bevorzugt in einem Bereich von 500 mm bis 1500 mm, und besonders bevorzugt in einem Bereich von 600 mm bis 1000 mm.

## Claims

1. Self-adhesive film for adhering a floor covering, more especially a carpet base, to a floor, more especially a parquet floor, said film having a carrier layer which is coated with an pressure-sensitive adhesive coating on an upper surface, facing the floor covering, and on a lower surface, facing the floor, the pressure-sensitive adhesive coating having a different adhesive strength on the two surfaces, and the adhesive strength on the lower surface being less than that on the upper surface, **characterised in that** the carrier layer is formed from a plastics material film, and the pressure-sensitive adhesive coating is evenly applied at least on the lower surface, and **in that** the self-adhesive film is provided with a minimum width of 350 mm for covering large areas of the floor which is to be covered with the floor covering.

2. Self-adhesive film according to claim 1, **characterised in that** the self-adhesive film has a textile structure, at least on the upper surface.

3. Self-adhesive film according to claim 2, **characterised in that** the textile structure has filaments arranged in a wide-meshed manner.

4. Self-adhesive film according to claim 3, **characterised in that** the textile structure has filaments running parallel to one another in a wide-meshed manner as well as filaments disposed in a rhomboid manner at an obtuse angle thereto.

5. Self-adhesive film according to one of claims 2 to 4, **characterised in that** the textile structure has filaments at a filament spacing of between 3 and 30 mm.

6. Self-adhesive film according to one of claims 1 to 5, **characterised in that** the adhesive strength of the lower surface has an adhesive force (measured in accordance with DIN 1939) in the order of magnitude of 0.8 to 5 N, more especially 1.5 to 3 N and more especially 2.0 to 2.6 N.

7. Self-adhesive film according to one of claims 1 to 6, **characterised in that** the different adhesive strength of the two surfaces is achieved by different adhesive application weights, the surface with the greater adhesive strength having a higher adhesive application weight.

8. Self-adhesive film according to one of claims 1 to 7, **characterised in that** the pressure-sensitive adhesive coating comprises respectively different pressure-sensitive adhesives on the upper and respectively the lower surface.

9. Self-adhesive film according to claim 7 or 8, **characterised in that** the adhesive application weight on the upper surface lies in the range between 100 and 250 g/m² and on the lower surface in the range between 5 and 40 g/m², more especially between 8 and 20 g/m².

10. Self-adhesive film according to one of claims 1 to 9, **characterised in that** a removable cover film is present on at least the upper surface.

11. Self-adhesive film according to one of claims 1 to 10, **characterised in that** the width of the self-adhesive film lies in a range between 350 mm and 2000 mm, preferably in a range between 500 mm and 1500 mm, and in particular preferably in a range between 600 mm and 1000 mm.

## Revendications

1. Feuille auto-adhésive, pour le collage d'un revêtement de sol, en particulier d'une moquette, sur un sol, en particulier du parquet, avec une couche support qui est revêtue d'une couche adhésive de maintien sur une face supérieure, appliquée contre le revêtement de sol, et sur une face Inférieure, appliquée contre le sol, la couche adhésive de maintien présentant une adhésivité différente sur les deux faces et l'adhésivité sur la face inférieure étant moindre que celle sur la face supérieure,
**caractérisée en ce que**
la couche support se compose d'une feuille de matière plastique et la couche adhésive de maintien est conformée plane au moins sur la face inférieure, et **en ce que** la feuille auto-adhésive est conformée avec une largeur minimale de 350 mm pour une couverture étendue du sol avec le revêtement de sol à poser.

2. Feuille auto-adhésive selon la revendication 1, **caractérisée en ce que** la feuille auto-adhésive comprend une structure textile au moins sur la face supérieure.

3. Feuille auto-adhésive selon la revendication 2, **caractérisée en ce que** la structure textile comprend des fils avec une configuration à grandes mailles.

4. Feuille auto-adhésive selon la revendication 3, **caractérisée en ce que** la structure textile comprend des fils s'étendant parallèlement avec une configuration à grandes mailles ainsi que des fils disposés à angle obtus y formant des losanges.

5. Feuille auto-adhésive selon l'une des revendications 2 à 4, **caractérisée en ce que** la structure textile comprend des fils avec un intervalle entre fils de 3 à 30 mm.

6. Feuille auto-adhésive selon l'une des revendications 1 à 5, **caractérisée en ce que** l'adhésivité de la face inférieure présente une force d'adhérence (mesurée selon DIN 1939) dont l'ordre de grandeur est de 0,8 à 5 N, en particulier de 1,5 à 3 N, en particulier de 2,0 à 2,6 N.

7. Feuille auto-adhésive selon l'une des revendications 1 à 6, **caractérisée en ce que** l'adhésivité différente des deux faces est obtenue par des masses différentes d'adhésif appliqué, la face supérieure d'adhésivité plus élevée présentant une masse supérieure d'adhésif appliqué.

8. Feuille auto-adhésive selon l'une des revendications 1 à 7, **caractérisée en ce que** la couche adhésive de maintien comprend des adhésifs de maintien différents, respectivement, sur la face supérieure et sur la face inférieure.

9. Feuille auto-adhésive selon la revendication 7 ou 8, **caractérisée en ce que** la masse d'adhésif appliqué est comprise sur la face supérieure dans la plage de 100 à 250 g/m² et sur la face inférieure dans la plage de 5 à 40 g/m², de préférence 8 à 20 g/m².

10. Feuille auto-adhésive selon l'une des revendications 1 à 9, **caractérisée en ce qu'**un film de protection détachable est prévu au moins sur la face supérieure.

11. Feuille auto-adhésive selon l'une des revendications 1 à 10, **caractérisée en ce que** la largeur de la feuille auto-adhésive se situe dans une plage de 350 à 2000 mm, avantageusement dans une plage de 500 mm à 1500 mm, très avantageusement dans une plage de 600 mm à 1000 mm.
